**Europäisches Patentamt**

**European Patent Office**

**Office européen des brevets**

(19)

(11) Veröffentlichungsnummer : **0 381 918 B1**

(12)

# EUROPÄISCHE PATENTSCHRIFT

(45) Veröffentlichungstag der Patentschrift :
**17.06.92 Patentblatt 92/25**

(51) Int. Cl.⁵ : **G01D 5/34,** G01D 5/36,
G01B 11/02

(21) Anmeldenummer : **89890311.7**

(22) Anmeldetag : **05.12.89**

(54) Inkrementales Messsystem.

(30) Priorität : **07.02.89 AT 246/89**

(43) Veröffentlichungstag der Anmeldung :
**16.08.90 Patentblatt 90/33**

(45) Bekanntmachung des Hinweises auf die
Patenterteilung :
**17.06.92 Patentblatt 92/25**

(84) Benannte Vertragsstaaten :
**BE CH DE FR GB IT LI LU NL SE**

(56) Entgegenhaltungen :
**EP-A- 0 085 787**
**GB-A- 2 065 872**
**GB-A- 2 159 941**

(73) Patentinhaber : **RSF-Elektronik Gesellschaft
m.b.H.
A-5121 Tarsdorf 93 (AT)**

(72) Erfinder : **Rieder, Heinz
Maria Bühelstrasse 23
A-5110 Oberndorf (AT)**
Erfinder : **Schwaiger, Max
Weilhartstrasse 13
A-5121 Ostermiething (AT)**

(74) Vertreter : **Hübscher, Heiner, Dipl.-Ing. et al
Spittelwiese 7
A-4020 Linz (AT)**

## Beschreibung

Die Erfindung betrifft ein inkrementales Meßsystem, insbesondere ein Längenmeßsystem nach dem Oberbegriff des Patentanspruches 1.

Ein derartiges Längenmeßsystem ist aus der EP-A-0 085 787 bekannt.

Meßsysteme dieser Art werden vorwiegend für hochgenaue Längenmessungen, in einer abgewandelten Form als Drehmelder auch für hochgenaue Winkelmessungen verwendet. Bei der Abtastung der Meßteilung, die meist aus Inkrementen mit je einem Hell- und einem Dunkelfeld in Teilungen bis zu 0,004 mm besteht, werden in ihrer Grundform sinusförmige, analoge Meßsignale erhalten, von denen bei der Abtastung je ein vollständiger Signalzug von einem vollständigen Maßstabinkrement erzeugt wird. Meist werden wenigstens zwei beispielsweise um 90° phasenverschobene Meßsignale erzeugt. Die Meßsignale werden in Zählsignale umgeformt und bzw. oder Rechnern zur Interpolationsberechnung zugeführt, wobei schon Meß- oder Anzeigegenauigkeiten von 0,0001 mm erreicht werden. Die Verstell- und damit Zählrichtung wird aus den phasenverschobenen Signalzügen ermittelt. Die digitalen Zählsignale können auch als Steuersignale für Maschinen- und Robotersteuerungen verwendet werden. Zur Herstellung einer eindeutigen Beziehung zwischen den analogen Meßsignalen und der jeweils abgetasteten Maßstabstelle ist es notwendig, die Auswertungseinrichtung bzw. Zähleinrichtung an vorwählbaren Maßstabstellen auf bestimmte Werte, beispielsweise Null, zu setzen. Diese Setzvorgänge sind jedenfalls vor der Inbetriebnahme einer Meßanlage und meist zumindest bei Arbeitsbeginn notwendig. Dafür werden von den Referenzmarken durch Abtastung abgeleitete Referenzsignale verwendet. Die Referenzmarken werden gemeinsam mit der Meßteilung meist auf photolithographischem Wege angebracht, wobei darauf zu achten ist, daß die erzeugbaren Referenzsignale phasen- bzw. flankenrichtig zu den erzeugten analogen Meßsignalen bzw. den abgeleiteten digitalen Zählsignalen abgegeben werden. Es ergibt sich häufig die Notwendigkeit, bei sonst gleichen Maßstäben an verschiedenen Maßstabstellen Referenzsignale zu erzeugen. Es wäre nun unwirtschaftlich, diese Referenzmarken spezifisch für jeden Maßstab anzubringen, weshalb ein häufig gewählter Weg darin besteht, eine Vielzahl von Referenzmarken in gleicher oder ungleichmäßiger Teilung gleich bei der Maßstabherstellung anzubringen und aus diesen Referenzmarken die benötigte bzw. die benötigten auszuwählen. Eine Entfernung oder Überklebung von Referenzmarken ist praktisch nur im Herstellerbetrieb möglich bzw. sinnvoll und kann jedenfalls nicht ohne weiteres am Aufstellungsort des gekapselten Meßsystemes vorgenommen werden. Es wäre hier notwendig, den Maßstab auszubauen und die entsprechenden Überklebungen bzw. Abkratzungen von Referenzmarken vorzunehmen, wobei es sehr leicht zu Be schädigungen, Verschmutzungen und Dejustierungen der Abtasteinheit kommen kann. Es ist hier zu berücksichtigen, daß für hochgenaue Messungen vielfach sogar Korrekturtabellen für das Meßsystem, die im Herstellerbetrieb durch Vergleich der Meßergebnisse des Meßsystems mit einem übergeordneten Meßsystem, z. B. einem Laser-Interferometer, erhalten wurden, verwendet und meist in Korrekturspeichern der Auswertungseinheit eingesetzt werden. Ferner ist es auch manchmal üblich, das Meßsystem in einer Schutzgasatmosphäre oder unter Überdruck zu betreiben. Aus diesen Schwierigkeiten heraus wurden andere Wege zur Auswahl von Referenzmarken für die Erzeugung von Referenzsignalen beschritten. Eine Möglichkeit besteht darin, einzelne Referenzmarken durch zusätzliche Einrichtungen bzw. zusätzliche Kennzeichnungsmerkmale zu kennzeichnen, so daß beim Überfahren festgestellt werden kann, welche Referenzmarke eben angefahren wurde und ein Referenzsignal nur an ausgewählten Referenzmarken weitergeleitet wird. An Auswahlsystemen sind mechanische Ein-Ausschalter zur Aktivierung der Auswertungsschaltung nur an vorgewählten Referenzmarken und an vorwählbaren Maßstabstellen anbringbare Magnete (deren Anbringung aber wieder einen Eingriff in das gekapselte Meßsystem erfordert) zur Betätigung von Reedrelais bekannt. Es ist auch bekannt, die Referenzmarken in mehreren Referenzspuren vorzusehen, jeder Spur eine Abtasteinheit zuzuordnen und eine Referenzmarke durch Auswahl der Abtasteinheit der zugeordneten Spur für die Abgabe von Referenzsignalen auszuwählen. Auch hier erfordert die Änderung der Auswahl bestimmter Referenzmarken und auch die Einstellung der Auswahl einen beträchtlichen, nur vom Fachmann durchführbaren Arbeits- und Zeitaufwand sowie in jedem Fall einen hohen Anlagenaufwand. Bei der oben schon erwähnten Löschung von Referenzmarken ist es auch möglich, die Referenzmarken in gleicher Teilung vorzusehen und doppelte Abtasteinrichtungen zu verwenden, die in Gegenschaltung verbunden sind, so daß sich ihre Signale aufheben, soferne nicht gleichzeitig eine vorhandene und der Bereich einer gelöschten Referenzmarke abgetastet werden. Die Löschung der Referenzmarken erfordert hier wieder einen Eingriff in das Meßsystem. Abgesehen davon können gelöschte Referenzmarken praktisch nicht mehr ersetzt werden, so daß keine Änderungen in der ursprünglich getroffenen Auswahl der zu aktivierenden Referenzmarken möglich sind.

Bei dem Meßsystem nach der EP-A-0 085 787 findet ebenfalls eine Auswahlschaltung Verwendung. Es werden im Gehäuse von außen erreichbare Längsbohrungen vorgesehen, in die nach einer Ausführungsform ein Dauermagnet für den Bereich der auszuwählenden Referenzmarke und gleichlange Distanzstücke zur Ausfüllung der Bohrung oder Nut bis zu den Enden eingeführt werden, wobei mit der Abtasteinheit ein vom Magneten betätigbarer Auswahlschalter verbunden ist. Das Einfädeln des Magneten und der Distanzstücke ist aufwendig. Nach einer Variante ist vorgesehen, die Aufnahmebohrung für das Auswahlelement und die Distanzstücke über eine Nut zum Gehäuseinnenraum und damit zur Abtasteinheit zu öffnen und als Auswahlelemente entweder eine Beleuchtungseinrichtung für einen zusätzlichen, einen Auswahlschalter aktivierenden lichtempfindlichen Empfänger auf der Abtasteinheit oder einen Reflektor vorzusehen, der dann das Licht einer zusätzlich auf der Abtasteinheit angebrachten Beleuchtungseinrichtung zu einem ebenfalls auf der Abtasteinheit angebrachten lichtempfindlichen Empfänger eines Auswahlschalters reflektiert. Eine entsprechende Anordnung ist aufwendig und es ergeben sich wegen der Verbindung der Aufnahmebohrung für die Auswahlelemente mit dem Gehäuseinnenraum Abdichtungs- und Reinhaltungsprobleme für diesen Gehäuseinnenraum. Das Einfädeln und Positionieren der Auswahlemente und Distanzstücke ist in jedem Fall aufwendig und es ergibt sich durch die notwendige Auswahlschaltung mit Empfänger und Steuerschalter wieder ein zusätzlicher Aufwand an der Abtasteinheit.

Ebenfalls mit von der Beleuchtung eines photoelektrischen Empfängers an der Abtasteinheit abhängiger Auswahlschaltung arbeitet ein Meßsystem nach der GB-A-2 065 872. Bei dieser Konstruktion ist vorgesehen jede Referenzmarke abzutasten und einen zusätzlichen photoelektrischen Empfänger der Auswahlschaltung dauernd zu beleuchten und im Bereich der ausgewählten Referenzmarke bzw. Referenzmarken Abdeckungen an Trägern vorzusehen, die in die Abtasteinheit einragend den genannten photoelektrischen Empfänger im Bereich der ausgewählten Referenzmarke abdecken. Die Auswahlschaltung ist so eingestellt, daß bei gleichzeitigem Empfang eines Referenzsignales und bei Beleuchtung des Empfängers der Auswahlschaltung kein Referenzsignal ausgelöst wird, also ein Referenzsignal nur im Bereich der Abdeckungen ausgenützt wird. Eine Kapselung mit einwandfreier Abdichtung des Gehäuseinnenraumes erscheint unmöglich. Auch hier wird der Gesamtaufwand durch die notwendige zusätzliche Anordnung der Auswahlschaltung und des zugeordneten Empfängers sowie durch die notwendige Beleuchtung dieses Empfängers erhöht.

Aufgabe der Erfindung ist die Schaffung eines Meßsystems der eingangs genannten Art, bei dem eine nachträgliche Auswahl von Referenzmarken mit einfachsten Mitteln ohne Verwendung einer zusätzlichen Auswahlschaltung und ohne gefährlichen Eingriff in das gekapselte Meßsystem auch am Aufstellungsort dieses Meßsystems ermöglicht wird.

Die gestellte Aufgabe wird durch die im Patentanspruch 1 angegebenen Merkmale gelöst.

Die erfindungsgemäße Lösung erscheint im nachhinein äußerst einfach, bringt aber gegenüber allen bekannten Lösungen gerade durch ihre Einfachheit entscheidende Vorteile. Ein bevorzugter Weg bei der Verwirklichung der Erfindung besteht darin, zunächst alle Referenzmarken abzudecken und am Betriebsort nur die benötigte bzw. die benötigten Referenzmarken freizugeben. Ablöse- bzw. Freigabeeinrichtungen für Abdeckungen lassen sich bei einfachen Konstruktionen leichter bauen als Einrichtungen, die sowohl ein Aufsetzen als auch ein Abnehmen von Abdeckungen ermöglichen.

Eine einfache Ausführungsform besteht darin, daß die Abdeckungen aus schlitzseitig auf den Maßstab aufgesetzten, den Maßstab mit Federschenkeln umgreifenden Klemmplättchen bestehen, die über ein durch den Schlitz einführbares Haltewerkzeug aufsetzbar, abnehmbar bzw. verschiebbar sind. Eine Variante dieser Lösung besteht darin, am meist schwertartig ausgebildeten Betätigungsfühler selbst ein- und ausfahrbare, von außen betätigte Ablöseeinrichtungen für schon aufgesetzte Abdeckungen anzubringen. Dabei ist es auch möglich, die Klammern in Führungsnuten des Maßstabes zu verklemmen und mit Hilfe der Werkzeuge im Bedarfsfall in die bzw. aus der Abdeckstellung für eine Referenzmarke zu verschieben.

Nach einer anderen Ausführung weist das Gehäuse in Zuordnung zu den Referenzmarken angebrachte, dicht verschließbare Öffnungen zum Einführen, Abnehmen bzw. Verschieben der Abdeckungen auf.

Eine problemlose Handhabung wird bei einer weiteren Variante möglich, nach der die Abdeckung in Form eines Bandes oder einer Platte über die Referenzspur bzw. -spuren durchgehend vorgesehen, über äußere Handhaben in Spurlängsrichtung verstellbar und mit wenigstens einem auf eine Referenzmarke einstellbaren Fenster versehen ist. Die Bandenden können abgedichtet zu den äußeren Handhaben herausgeführt und nach Einstellung des Fensters auf eine Referenzmarke befestigt oder entfernt werden.

Um ohne zu große Verstellwege für das Band bzw. die Platte auszukommen, wenn Referenzmarken an verschiedensten Längsbereichen des Maßstabes auswählbar sein sollen, kann die Abdeckung in von den Abständen der Referenzmarken abweichenden Abständen angebrachte Fenster aufweisen, von denen jeweils eines auf eine Referenzmarke einstellbar ist. Dabei können die Referenzmarken und die Fenster in gleichmäßiger Teilung vorgesehen sein, wobei die Teilung der Fenster aber noniusartig von der Teilung der Referenzmarken abweicht. In ganz ähnlicher Weise könnten bei einem Drehgeber mit auf einer Kreisspur angeordneten Referenzmarken auf einem dann kreisringförmigen Abdeckkörper, z. B. einer Ringplatte, Fenster angebracht werden.

Vorstehend wurden nur einige vorteilhafte Ausbildungen der erfindungsgemäßen Grundkonstruktion angegeben, die nicht erschöpfend sind. Es ist auch möglich, alle Referenzmarken mit Abdeckungen zu versehen, die federnd im Sinne einer Freigabe der zugeordneten Referenzmarke vorgespannt sind und von außen her durch Schrauben oder Stifte in der Abdeckstellung gehalten werden, so daß durch eine geringe Verstellung der Schrauben bzw. Stifte eine Freigabe erzielt wird.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen

Fig. 1 in schematischer Darstellungsweise ein nach optoelektronischen Abtastprinzipien arbeitendes inkrementales Meßsystem im Querschnitt durch den Maßstab und das Schutzgehäuse,

Fig. 2 als Detail zu Fig. 1 einen Teillängsschnitt durch das Schutzgehäuse im Anbringungsbereich einer Abdeckung,

Fig. 3 eine Ausführungsvariante mit in Ansicht dargestelltem Maßstab,

Fig. 4 einen Teillängsschnitt durch ein Meßsystem, wobei die Abtasteinheit weggelassen wurde und

Fig. 5 zur näheren Erläuterung der Fig. 4 übereinander Referenzmarken und Fenster einer Abdeckeinrichtung.

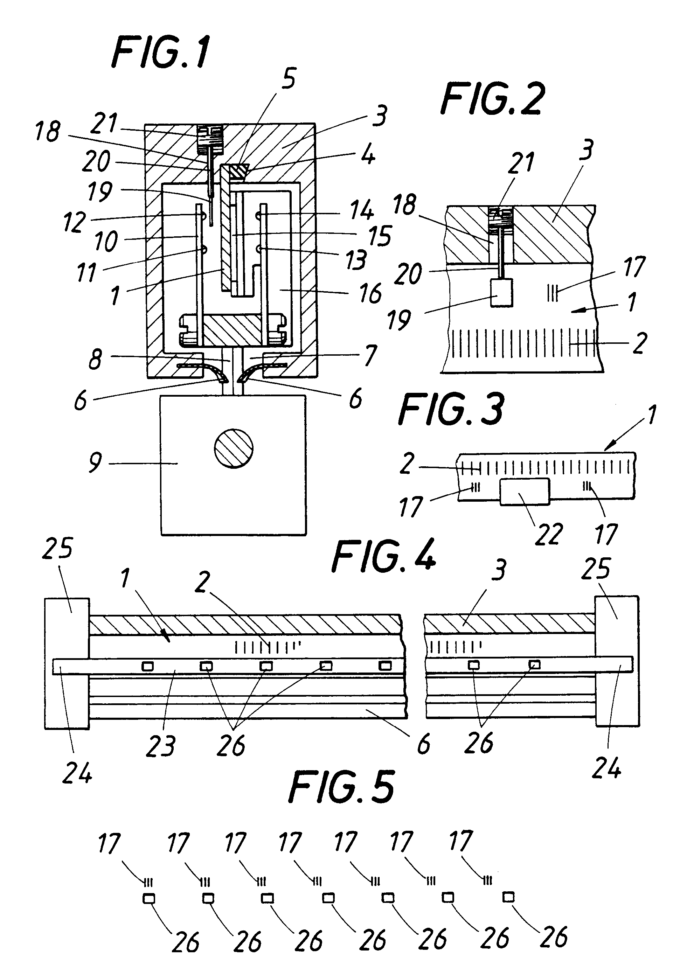

Nach den Fig. 1 und 2 ist ein z. B. aus einem Glaskörper bestehender Maßstabkörper 1 mit einer in Fig. 2 als Strichteilung 2 dargestellten, inkrementalen Meßteilen versehen. Der Maßstabkörper 1 ist in einem rohrförmigen, im oberen Bereich zu einem Träger verstärkten Schutzgehäuse 3 untergebracht und wird an einem Rand in einer Nut 4 mittels eines elastischen Befestigungsteiles 5 festgehalten. Durch einen mit Dichtlippen 6 versehenen Schlitz 7 des Schutzgehäuses 3 ragt ein Schwert 8, das einen Betätigungsfühler darstellt und an einem gegenüber dem Maßstab 1 und dem Gehäuse 3 in Längsrichtung verstellbaren Körper 9, beispielsweise dem Schlitten einer Werkzeugmaschine, gehalten ist.

Am Schwert 8 ist ein Träger 10 angebracht, der Beleuchtungseinrichtungen 11, 12 und zugeordnete optoelektronische Empfänger 13, 14 trägt, wobei die Beleuchtungseinrichtungen 11 mehrere, beispielsweise vier, photoelektrische Empfänger 13 durch gegeneinander um Teilungsbruchteile versetzte Abtastgitter in einem mit Hilfe des Schwertes 8 in Maßstablängsrichtung verstellbaren Schieber 15 einer aus diesem Schieber 15, dem Träger 10 und einer Halterung 16 für den Schieber 15 gebildeten Abtasteinheit beleuchten. Die photoelektrischen Empfänger 13 erzeugen analoge Meßsignale, wobei meist zwei um 90° phasenverschobene Meßsignale einer Auswertungsstufe zugeführt werden.

Die Beleuchtungseinrichtung 12 dient zur Beleuchtung von am Maßstab 1 in einer eigenen Spur angebrachten Referenzmarken 17 für die am Schieber 15 ebenfalls ein 14 zugeordnetes Abtastgitter vorgesehen ist.

Um nur bestimmte Referenzmarken 17 auszuwählen, sind Abdeckungen for einzelne Referenzmarken vorgesehen. Nach den Fig. 1 und 2 sind zu diesem Zweck im Gehäuse 3 in Zuordnung zu den Referenzmarken Öffnungen 18 vorgesehen, die in ihrem unteren Teil aus Schlitzen und in ihrem oberen Teil aus Gewindebohrungen bestehen und durch die hindurch Abdeckplättchen 19 über je eine der Referenzmarken 17 (beim Ausführungsbeispiel an der Seite der Beleuchtung 12) anbringbar bzw. aus der Abdeckstellung herausnehmbar sind. Bei Abnahme eines solchen an einem elastischen Draht 20 sitzenden und von einer Schraube 21 festgehaltenen Plättchens wird die Öffnung 18 durch eine kurze Schraube mit Dichtungseinlage verschlossen.

Bei der Ausführung nach Fig. 3 sind Referenzmarken 17 in der Nähe des unteren Randes des Maßstabkörpers 1 vorgesehen. Für die eine Referenzmarke ist eine Abdeckung 22 in Form einer den unteren Maßstabrand federnd umgreifenden Klammer vorgesehen, die mit Hilfe eines zwischen den Dichtlippen 6 durch den Schlitz 7 eingeführten, flachen Haltewerkzeuges eingesetzt bzw. abgenommen werden kann.

Bei der Ausführung nach den Fig. 4 und 5 sind die Referenzmarken wieder im unteren Bereich des Maßstabes 1 in einer durchgehenden Spur und in gleichmäßiger Teilung angebracht. Ein Abdeckband 23 liegt über der gesamten Referenzspur, wobei Handhaben bildende Enden 24 dieses Bandes in seitliche Kopfstücke 25 herausgeführt sind. Die Kopfstücke 25 können nach einer Möglichkeit auch als Befestigungsteile des Meßsystems ausgeführt sein. Bevorzugt wird jedoch eine Konstruktion, bei der die Kopfstücke 25 eigene Kammern einschließen, in denen von außen betätigbare Aufwickeleinrichtungen, z. B. Wickelwalzen für das Abdeckband 23 angebracht sind. Das Abdeckband selbst kann durch Dichtlippen herausgeführt werden. Die Referenzmarken sind hier, wie erwähnt, in gleichmäßiger Teilung vorgesehen. Das Band 23 besitzt ebenfalls in gleichmäßiger Teilung Fenster 26, wobei aber die Teilung der Fenster von der Teilung der Referenzmarken 17 (siehe Fig. 5) abweicht. Es ergibt sich ein Noniuseffekt, so daß jeweils nur eines der Fenster 26 bei Verschiebung des Bandes 23 eine Referenzmarke 17 vollkommen freigibt, alle anderen Referenzmarken 17 aber ganz oder zum Teil abgedeckt werden. Beim Ausführungsbeispiel ist die erste Referenzmarke von links von zugeordneten Fenster 26 des Bandes 23 freigegeben. Die beiden nach rechts folgenden Referenzmarken 17, und auch die nach links folgenden Referenzmarken sind von den Fenstern 26 nur zum Teil abgedeckt. Es werden hier beim Überfahren im Empfänger 14 gegenüber dem Referenzsignal an der voll freigegebenen Referenzmarke 17 verzerrte Signale erzeugt, die zwar nicht zur Auslösung eines Referenzimpulses, aber dafür eingesetzt werden können, um die Auswertungsschaltung für den Referenzimpuls für die Erzeugung dieses Impulses an der tatsächlich freigegebenen Referenzmarke bereit zu stellen.

**Patentansprüche**

1. Inkrementales Meßsystem, insbesondere Längenmeßsystem, mit einem Maßstab (1), auf dem eine über eine optoelektronische Abtasteinheit (10 bis 16) zur Erzeugung von Meßsignalen abtastbare Meßteilung (2) und in wenigstens einer weiteren abtastbaren Spur zwei oder mehrere Referenzmarken (17) zur Erzeugung von Referenzsignalen an einem oder mehreren über Auswahlelemente (19, 22, 23) auswählbaren Bezugspunkten vorgesehen sind, wobei der Maßstab (1) und die Abtasteinheit (10 bis 16) in einem Gehäuse (3) gekapselt ist, aus dem ein Betätigungsfühler (8) für die Abtasteinheit (10 bis 16) durch einen von die Durchführung des Fühlers zulassenden Dichtungselementen (6) abgedeckten Schlitz (7) herausgeführt ist und die Auswahlelemente (19, 22, 23) für die zur Erzeugung von Referenzsignalen bestimmten Referenzmarken (17) von der Gehäuseauffenseite her setzbar sind, dadurch gekennzeichnet, daß wenigstens für einen Teil der Referenzmarken (17) selbst die Auswahlelemente bildende Abdeckungen (19, 22, 23) dieser Referenzmarken vorgesehen sind, die über verschließ- oder abdichtbare Gehäuseöffnungen (18) bzw. den Schlitz (7) einsetzbar, abnehmbar und/oder verschiebbar sind.

2. Meßsystem nach Anspruch 1, dadurch gekennzeichnet, daß die Abdeckungen aus schlitzseitig auf den Maßstab (1) aufgesetzten, den Maßstab mit Federschenkeln umgreifenden Klemmplättchen (22) bestehen, die über ein durch den Schlitz (7) einführbares Haltewerkzeug aufsetzbar, abnehmbar oder verschiebbar sind.

3. Meßsystem nach Anspruch 1, dadurch gekennzeichnet, daß das Gehäuse (3) in Zuordnung zu den Referenzmarken (17) angebrachte, dicht verschließbare Öffnungen (18) zum Einführen, Abnehmen bzw. Verschieben der Abdeckungen (19) aufweist.

4. Meßsystem nach Anspruch 1, dadurch gekennzeichnet, daß die Abdeckung in Form eines Bandes (23) oder einer Platte über die Referenzspur bzw. -spuren durchgehend vorgesehen, über äußere Handhaben (24) in Spurlängsrichtung verstellbar und mit wenigstens einem auf eine Referenzmarke (17) einstellbaren Fenster (26) versehen ist.

5. Meßsystem nach Anspruch 4, dadurch gekennzeichnet, daß die Abdeckung (23) in von den Abständen der Referenzmarken (17) abweichenden Abständen angebrachte Fenster (26) aufweist, von denen jeweils eines auf eine Referenzmarke einstellbar ist.

6. Meßsystem nach Anspruch 5, dadurch gekennzeichnet, daß die Referenzmarken (17) und die Fenster (26) in gleichmäßiger Teilung vorgesehen sind, die Teilung der Fenster aber noniusartig von der Teilung der Referenzmarken abweicht.

**Claims**

1. An incremental measuring system, particularly a system for measuring length, comprising a gauge (1) on which there is provided a graduated scale (2), which can be scanned by means of an opto-electronic scanner (10 to 16) to produce measurement signals, and two or more reference marks (17) in at least one further scannable track to produce reference signals at one or more reference points, which can be selected by selectors (19, 22, 23), wherein the gauge (1) and the scanner (10 to 16) are contained within a housing (3) from which an actuating sensor (8) for the scanner unit (10 to 16) extends outwardly through a slot (7) covered by a sealing element (6) permitting passage of the sensor, and the selectors (19, 22, 23) for the reference marks (17) designated to produce reference signals can be set from the outside of the housing, characterised in that covers (19, 22, 23) are provided for at least a portion of the reference marks (17) which form the selectors are provided, and said covers can be inserted, removed and/or moved by means of apertures (18) in the housing, which can be closed or sealed, or by means of the slot (7).

2. A measuring system according to Claim 1, characterised in that the covers are formed as small clamping plates (22) with spring shanks, which surround the gauge and which are placed on the gauge (1) on the same side as the slot, and clamping plates can be inserted, removed or moved by means of a holding tool which can be passed through the slot (7).

3. A measuring system according to Claim 1, characterised in that the housing (3) is provided with apertures (18), which can be closed so as to be sealed and which are arranged to align with the reference marks (17) for the insertion, removal or movement of the covers (19).

4. A measuring system according to Claim 1, characterised in that the cover is provided in the form of a

**EP 0 381 918 B1**

band (23) or a plate extending continuously over the reference track or tracks, and said cover can be adjusted by external handles (24) in the longitudinal direction of the track and is provided with at least one window (26) for adjusting to a reference mark (17).

5. A measuring system according to Claim 4, characterised in that the covering (23) is provided with windows (26) arranged with a spacing differing from the spacing of the reference marks (17), of which one in each case can be adjusted to a reference mark.

6. A measuring system according to Claim 5, characterised in that the reference marks (17) and the windows (26) are evenly spaced, but the spacing of the windows differs in a nonius-like manner from the spacing of the reference marks in the manner of a Vernier scale.

## Revendications

1. Système de mesure incrémental, en particulier système de mesure de longueurs, comprenant une règle (1) sur la,quelle sont prévus une échelle de mesure (2) pouvant être lue à l'aide d'une unité de lecture électrooptique (10 à 16) pour produire des signaux de mesure, et dans au moins une piste supplémentaire à balayer, deux ou plusieurs repères de référence (17) pour produire des signaux de référence dans un ou plusieurs points de référence pouvant être sélectionnés au moins d'éléments de sélection (19,22,23), la règle (1) et l'unité de lecture (10 à 16) étant encastrées dans un boîtier (3) duqel sort un détecteur d'actionnement (8) pour l'unité de lecture (10 à 16) par une fente (7) recouverte par des éléments d'étanchéité permettant le passage du détecteur et les éléments de sélection (19,22,23) pour les marques de référence (17) destinées à la génération de signaux de référence pouvant être ajustés à partir de l'extérieur du boîtier, caractérisé en ce que pour au moins une partie des marques de référence (17) mêmes, des caches (19,22,23) sont prévues pour ces repères de référence pour former les éléments de sélection, lesdites caches pouvant être insérées, enlevées et/ou déplacées à travers des ouvertures (18) dans le boîtier et la fente (7), respectivement, qui peuvent être fermées ou bouchées.

2. Système de mesure selon la revendication 1, caractérisé en ce que les caches sont des petites plaques à friction (22) posées sur la règle (1) à partir du côté de la fente et embrassant la règle au moyen de montants élastiques, ces petites plaques à friction (22) pouvant être posées, enlevées ou déplacées au moyen d'un outil de retenue pouvant être introduit par la fente (7).

3. Système de mesure selon la revendication 1, caractérisé en ce que le boîtier (3) comprend des ouvertures (18) pouvant être bouchées, qui sont placées de façon coordonnée par rapport aux repères de référence (17) pour introduire, enlever ou déplacer les caches (19).

4. Système de mesure selon la revendication 1, caractérisé en ce que la cache est prévue sous forme d'une bande (23) ou d'une plaque continue au-dessus de la trace ou des traces de référence, peut être déplacée en direction longitudinale de la trace au moyen de manettes extérieures (24) et est pourvue d'au moins une fenêtre (26) pouvant être ajustée sur le repère de référence (17).

5. Système de mesure selon la revendication 4, caractérisé en ce que la cache (23) comprend des fenêtres (26) pratiquées à des distances différentes des distances des repères de référence et dont une peut être ajustée avec un repère de référence.

6. Système de mesure selon la revendication 5, caractérisé en ce que les repères de référence (17) et les fenêtres (26) ont des écartements uniformes, mais que l'écartement des fenêtres diffère sous forme de vernier de la séparation des marques de référence.

6

FIG.1

FIG.2

FIG.3

FIG.4

FIG.5